# EUROPEAN PATENT APPLICATION

(11) **EP 1 440 944 A1**
(43) Date of publication of application: **28.07.2004**
(21) Application number: 03029922.6
(22) Date of filing: 29.12.2003
(51) Int. Cl.: C02F 9/00, C02F 3/12, C02F 1/44, C02F 3/08, B01D 61/18

(54) **Waste water treatment method**

(30) Priority: 09.01.2003 JP 2003003190
(71) Applicant: Kuraray Co., Ltd., Kurashiki-City, Okayama 710-8622 (JP)
(72) Inventor: Fujii, Hiroaki, Kuraray Saijo Co., Ltd., Saijo-shi Ehime 793-0027 (JP); Liura, Tsutomu, Kuraray Co., Ltd., Kurashiki-shi Okayama 710-8622 (JP); Kobayashi, Goro, Kuraray Co., Ltd., Chuo-ku Tokyo 103-0027 (JP); Baba, Yasuhiro, Kuraray Saijo Co., Ltd., Saijo-shi Ehime 793-0027 (JP)
(74) Representative: VOSSIUS & PARTNER

(57) **Abstract**

A method of treatment of waste water includes a sludge flocculating step of obtaining a supernatant liquid by flocculating within a flocculation tank 4 the sludge having been treated within an activated sludge aeration tank 3 where the waste water and an activated sludge are brought into contact with each other in an aerobic condition, a sludge concentration retaining step of retaining a concentration of a sludge within the activated sludge aeration tank 3 at a predetermined value by returning portion of a sludge within the flocculation tank 4 to the activated sludge aeration tank 3, an excessive sludge complete oxidation step of maintaining an excessive sludge, which is the sludge supplied from the flocculation tank 4, but exclusive of that portion of the sludge returned from the flocculation tank 4, in a complete oxidation state in which a speed of propagation of the sludge and a speed of self-oxidation of the sludge within the complete oxidation tank 5 are held in equilibrium with each other; and an excessive sludge filtration step of filtering a waste water containing the sludge within the complete oxidation tank 5, through a separation membrane 6 having a pore size not larger than 5 µm to thereby discharge a resultant filtrate in a quantity corresponding to an amount of a water component in the complete oxidation tank 5 increased.

## Description

The present invention generally relates to a method of treatment of waste water and, more particularly, to the waste water treatment method effective to reduce the cost for the filtering facilities and the running cost with minimization of the sludge to be drawn.

Hitherto, the activated sludge process has been largely employed in treatment of waste water. In the practice of this activated sludge process, after the organic matter has been dissolved by bringing the waste water into contact with an activated sludge (i.e., floc containing aerobic microorganisms) in an aerobic condition within the activated sludge aeration tank, the sludge is flocculated or settled within the flocculation tank, leaving a supernatant liquid. In such case, portion of the sludge is returned to the activated sludge aeration tank while another portion thereof is drawn as an excessive sludge, allowing the system capable of being operated steadily under the BOD (biochemical oxygen demand) volume load of 0.30 to 0.8 kg/m³·day (See, for example, "Go-tei, Kougaibousi-no Gijutsu to Houki --Suishitsu Hen--) (5th Revision, Technology and Laws of Environmental Pollution Prevention --Water Quality--)" 7th edition, published by Sangyo Kankyo Kanri Kyokai (Industrial Environment Management Association), June 12, 2001, p 197), but this technique requires increase of the size of the activated sludge aeration tank.

On the other hand, development of the carrier capable of retaining a high concentration of microorganisms is in progress and if this can be used, it is possible to impart the BOD volume load that is so high as 2 to 5 kg/m³ · day and, therefore, the aeration tank can be reduced in size. See, for example, "Kankyo Hozen ·Haikibutsu Shori Sougo Gijutsu Gaido (Environmental Preservation Processing of Industrial Wastes, Guide to General Technology)" published by Kougyo Chousa-kai, February 12, 2002, p 70.

With the conventional activated sludge process, it has been found that when the system is operated under such a high BOD volume load as discussed above, not only does the treatment tend to be lowered, but flocculation of the sludge is also lowered, making it difficult to achieve the subsequent separation of the sludge within the flocculation tank following the activated sludge aeration tank. Therefore, the system can hardly be operated steadily. Also, while it is generally said that about 50% of the BOD component removed is transformed into a sludge (an excessive sludge), it is therefore necessary to draw the excessive sludge out of the system, which is, after having been dehydrated, subjected to a final disposition such as a land reclamation and/or incineration.

In addition, although the system that does not generate the excessive sludge would be theoretically constructed if a complete oxidation state, in which the speed of propagation of the sludge and the speed of self-oxidation of the sludge within the complete oxidation tank are held in equilibrium with each other, is established with no need to draw the sludge, establishment of the complete oxidation state within the activated sludge aeration tank would result in a considerable increase of the concentration of MLSS (mixed liquor suspended solids) within the activated sludge aeration tank and, therefore, such an inconvenience would occur that the activated sludge aeration tank must have a considerable size. In such case, another problem would arise in that since the sludge is finely divided, the separation of the sludge based on natural flocculation cannot be achieved.

In contrast thereto, with the process utilizing the carrier (hereinafter referred to as the carrier process), it can be imparted a high load and, therefore, the aeration tank can be compactified. However, the carrier process tends to result in generation of finely divided sludge that can be settled and separated. The inventors of the present invention have already suggested a waste water treatment apparatus and a waste water treatment method, in which a combination of an aerobic process utilizing the carrier with the complete oxidation tank and the separation membrane is utilized to suppress generation of the excessive sludge such as disclosed in the Japanese Laid-open Patent Publication No. 2001-205290. However, the waste water treatment apparatus and the waste water treatment method disclosed in the above mentioned publication have subsequently been found having a problem in that the membrane filtering unit tends to become bulky, accompanied by an increased cost for facilities and an increased running cost.

Accordingly, the present invention having been devised in view of the foregoing inconveniences and problems is intended to provide a waste water treatment method effective to reduce the cost for facilities and the running cost with minimization of the sludge to be drawn.

The present invention provides a method of treatment of waste water, which includes a sludge flocculating step of obtaining a supernatant liquid by flocculating within a flocculation tank the sludge having been treated within an activated sludge aeration tank where the waste water and an activated sludge are brought into contact with each other in an aerobic condition; a sludge concentration retaining step of retaining a concentration of a sludge within the activated sludge aeration tank at a predetermined value by returning portion of a sludge within the flocculation tank to the activated sludge aeration tank; an excessive sludge complete oxidation step of maintaining an excessive sludge, which is the sludge supplied from the flocculation tank, but exclusive of that portion of the sludge returned from the flocculation tank, in a complete oxidation state in which a speed of propagation of the sludge and a speed of self-oxidation of the sludge within the complete oxidation tank are held in equilibrium with each other; and an excessive sludge filtration step of filtering the waste water containing the sludge within the complete oxidation tank, through a separation membrane having a pore size not larger than 5 µm to thereby discharge a resultant filtrate in a quantity corresponding to an amount of a water component in the complete oxidation tank increased.

Preferably, the sludge flocculating step includes a substep of, after the waste water and a carrier have been brought into contact with each other in an aerobic condition within the carrier-fluidized aeration tank, bringing the waste water and the activated sludge into contact with each other in the activated sludge aeration tank and, thereafter, obtaining a supernatant liquid by flocculating the sludge within the flocculation tank.

If in the complete oxidation tank, the waste water is aerated under a low sludge load, the speed of propagation of the sludge and the speed of self-oxidation of the sludge within the complete oxidation tank can be brought in equilibrium with each other to thereby apparently considerably reduce the sludge to be drawn. For this purpose, it is preferred that the soluble-BOD sludge load within the complete oxidation tank is not larger than 0.08 kg-BOD/kg-MLSS· day and more preferably not larger than 0.05 kg-BOD/kg-MLSS·day. In general, if the complete oxidation tank is operated under such a low sludge load, the sludge can be dispersed and will no longer flocculate by itself and separation within the sludge tank will no longer be achieved.

According to the waste water treatment method of the present invention, by introducing into the complete oxidation tank, and subsequently filtering through the separation membrane, only a portion of the sludge propagated after the sludge flocculating process and the sludge concentration retaining process, the system can be operated continuously with minimization of the amount of the excessive sludge. In the excessive sludge complete oxidation process, since it is sufficient to achieve complete oxidation of only that portion of the sludge proliferated after the BOD component has almost been dissolved, no bulky complete oxidation tank is required and, by bringing the speed of propagation or proliferation of the sludge in equilibrium with the speed of self-oxidation of the sludge at a low sludge concentration, the amount of the sludge to be drawn can be reduced considerably. Also, since it is sufficient for the separation membrane to filter only a portion of water increased within the complete oxidation tank, it is possible to suppress the cost for the filtering facilities and the running cost to a considerably low value as compared with the case in which the total amount of the waste water is filtered. In addition, the use of the carrier-fluidized aeration tank is effective to achieve the highly loaded operation and to compactify the aeration tank.

Preferably, the waste water treatment method of the present invention furthermore includes an eutrophication preventing step of returning a total amount of or portion of the filtrate discharged during the excessive sludge filtering step to the carrier-fluidized aeration tank and/or the activated sludge aeration tank. Since the filtrate within the complete oxidation tank undergoes a self-oxidation, it contains nitrogen and phosphorus which have been dissolved from the microorganisms. Mere discharge of the nitrogen and phosphorus out from the system will constitute a cause of eutrophication. Accordingly, by returning them to the aeration tank intended for removal of the BOD component, they can be utilized as a source of nutrients for removal of the BOD component and, therefore, not only can the mount of the nitrogen and phosphorus to be discharged be reduced, but the amount of the nitrogen and phosphorus to-be added as a source of nutrients can also be reduced. Depending on the composition of the waste water and the operating technique used, it may occur that the treatment would complete satisfactorily with neither nitrogen nor phosphorus added. If an attempt is made to return the filtrate in the practice of the method disclosed in the first mentioned publication, the respective concentrations of nitrogen and phosphorus would be low because of a substantial amount of water, resulting in that the effect of reduction of the source of nutrients is low and that the amount of the waste water to be filtered increases. Accordingly, such attempt is almost of no merit.

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic diagram showing the sequence of treatment of waste water according to a first preferred embodiment of the waste water treatment method of the present invention;
Fig. 2 is a schematic diagram showing an example of the manner of arrangement of a separation membrane;
Fig. 3 is a schematic diagram showing another of the manner of arrangement of the separation membrane;
Fig. 4 is a schematic diagram showing a further example of the manner of arrangement of the separation membrane;
Fig. 5 is a schematic diagram showing the sequence of treatment of waste water according to a second preferred embodiment of the waste water treatment method of the present invention;
Fig. 6 is a schematic diagram showing the sequence of treatment of waste water according to a third preferred embodiment of the waste water treatment method of the present invention;
Fig. 7 is a schematic diagram showing the sequence of treatment of waste water according to a fourth preferred embodiment of the waste water treatment method of the present invention;
Fig. 8 is a schematic diagram showing the manner of arrangement of a complete oxidation tank and a second flocculation tank both used in a comparative example;
Fig. 9 is a schematic diagram showing the manner of arrangement of waste water treating facilities employed in the comparative example; and
Fig. 10 is a schematic diagram showing the manner of arrangement of the waste water treating facilities employed in the comparative example;

Hereinafter, some preferred embodiments of the present invention will be described in detail with reference to the accompanying drawings.

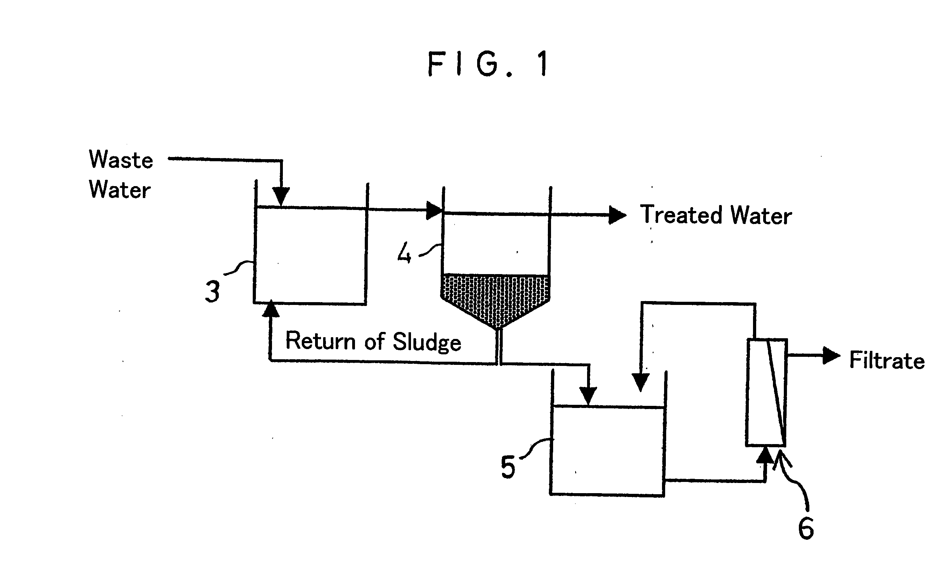

In particular, Fig. 1 illustrates, in a diagrammatic representation, the sequence of treatment of waste water according to a first preferred embodiment of the waste water treatment method of the present invention.

### Sludge Flocculating Process

Waste water or a water to be treated is, after it has been subjected to a pretreatment in which an oil component and excessive matter have been removed from the waste water, then introduced into an activated sludge aeration tank 3 shown in Fig. 1. Although the activated sludge aeration tank 3 and a flocculation tank 4 following the aeration tank 3 may be operated in the previously discussed known manner, they must be operated under a proper load of waste water in order to achieve a good flocculation characteristic in the flocculation tank 4. For the BOD sludge load, the value of 0.1 to 0.3 kg-BOD/kg-MLSS·day is preferred.

The waste water having been treated in the activated sludge aeration tank 3 is then introduced into the flocculation tank 4 where the excessive sludge discharged from the activated sludge aeration tank 3 in the known manner is allowed to flocculate by itself, with the resultant supernatant liquid subsequently discharged out of the system.

### Sludge Concentration Retaining Treatment

The sludge generally deposits at the bottom of the flocculation tank 4 in a quantity of 10,000 mg/liter as MLSS (mixed liquor suspended solid). However, in order to keep the interface between the sludge or the solid sediment and the supernatant liquid at a predetermined level, portion of the sludge is quantitatively or routinely drawn out from the bottom of the flocculation tank 4 while the remaining portion of the sludge is returned to the activated sludge aeration tank 3 so that it can be used for retaining the quantity of the MLSS at a predetermined value.

### Complete Oxidation Treatment of Excessive Sludge

The rest of the sludge which has been flocculated corresponds the excessive sludge of a propagated sludge component and is introduced into a complete oxidation tank 5. In this complete oxidation tank, the waste water being treated is aerated under a low sludge load with the sludge propagation rate being kept in proportion to the sludge self-oxidation rate so that the quantity of the drawn sludge can be apparently reduced considerably. For this purpose, the soluble-BOD (this is herein referred to as "s-BOD") sludge load in the complete oxidation tank 5 is preferably not larger than 0.08 kg-BOD/kg-MLSS. day and, more preferably, not larger than 0.05 kg- BOD/kg- MLSS·day.

### Excessive Sludge Filtration Treatment.

The waste water containing the sludge within the complete oxidation tank 5 is filtered through a separation membrane 6 to separate the waste water into the sludge and the water component and, while the sludge is confined within the complete oxidation tank 5, a filtrate (filtered water) corresponding to the quantity of water increased is discharged.

The separation membrane 6 that can be employed in the practice of the present invention may not be limited specifically to a particular shape and may be one selected suitably from the group consisting of hollow fiber membranes, tubular membranes and flat sheet membranes. However, the use of the hollow fiber for the separation membrane 6 is particularly advantageous in that the surface area of the membrane per unitary volume can be increased to such an extent as to allow the filtration apparatus as a whole to be reduced in size.

Also, material for the separation membrane may not be limited specifically to a particular material and, in consideration of the condition of use and/or the desired filtering performance, the separation membrane that can- be employed in the practice of the present invention may be an organic polymer membrane made of polyolefin, polysulfone, polyether sulfone, ethylene-vinyl alcohol copolymer, polyacrylonitrile, cellulose acetate, polyvinylidene fluoride, polyperfluoroethylene, polymethacrylate, polyester, polyamide or the like, or an inorganic membrane made of ceramic or the like.

However, the use is preferred of hydrophilic membranes made of hydrophilic materials such as polysulfone resins hydrophilicated with polyvinyl alcohol resins, polysulfone resins added with hydrophilic polymers, polyvinyl alcohol resins, polyacrylonitrile resins, cellulose acetate resins or hydrophilicated polyethylene resins, because a high hydrophilicity exhibited by such material renders SS components difficult to adhere onto the separation membrane or otherwise easy to be readily peeled off from the separation membrane. Yet, any other hollow fiber membranes made of other materials than those enumerated above can also be employed. For the organic polymer membranes for use in the present invention, a plurality of components may be copolymerized, or a plurality of materials may be blended.

Where the organic polymer is employed as materials for the separation membrane, the method of making the separation membrane that can be used in the practice of the present invention may not be specifically limited to a particular one, but may be chosen from any known methods in consideration of the characteristics of the material chosen and the shape and performance of the separation membrane.

The separation membrane that can be used in the practice of the present invention has a pore size preferably not larger than 5 µm and, more preferably, not larger than 0.1 µm to achieve a good separation between the sludge and the water component. The pore size referred to in the present invention is defined as corresponding to the particle size of such a standard substance as colloidal silica, emulsion or latex, which is exhibited when 90% of particles of such a standard substance is filtered through the separation membrane. While the pore size cannot be defined in the case of the ultrafiltration membranes based on the particle size of the standard substance, a protein having a known molecular weight may be used to measure the pore size of the ultrafiltration membranes and, by so measuring, the ultrafiltration membranes capable of fractionating proteins having a molecular weight of at least 3,000 are preferred for use in the present invention.

In either case, the separation membrane employed in the present invention preferably has a uniform pore size.

In the practice of the present invention, the separation membrane is modularized into a filter unit for use in filtration of the waste water. The manner of the separation membrane module can be suitably chosen in the shape of the separation membrane, the filtering method, the filtering condition and/or the washing method, and a membrane module may be constructed of one or a plurality of membrane elements. By way of example, in the case of the hollow fiber membrane module, tens to about half a million of hollow fiber membrane may be bundled and then configured to represent a generally U-shaped configuration within a module; may be bundled with one end of the bundle subsequently closed by means of a suitable sealing element within a module; may be bundled with one ends thereof subsequently separately closed by means of suitable sealing elements within a module; or may be bundled with opposite ends of the bundle left open. The hollow fiber membrane module, i.e., the filter unit may not be specifically limited to a particular shape, but may take a cylindrical shape or a shape similar to a flat screen.

As is well known to those skilled in the art, the filtering performance of the separation membrane generally lowers as clogging proceeds. However, the separation membrane can be regenerated when washed physically or chemically. Although to regenerate the clogged separation membrane any known washing method can be employed in consideration of the material used to form the separation membrane module, the shape of the separation membrane module and/or the pore size of the separation membrane used in the module, back washing with filtrate, back washing with gas, flashing, or air scrubbing can be employed as a method of physical cleaning of the hollow fiber membrane module. Alternatively, as a method of chemical cleaning of the hollow fiber membrane module, an acid washing method in which hydrochloric acid, sulfuric acid, nitric acid, oxalic acid or citric acid is used; an alkaline washing method in which sodium hydroxide is used, a washing method in which an oxidizing agent such as sodium hypochlorite or hydrogen peroxide is used, or a chelator washing method in which a chelating agent such as ethylene diamine 4 acetate is used can be suitably employed.

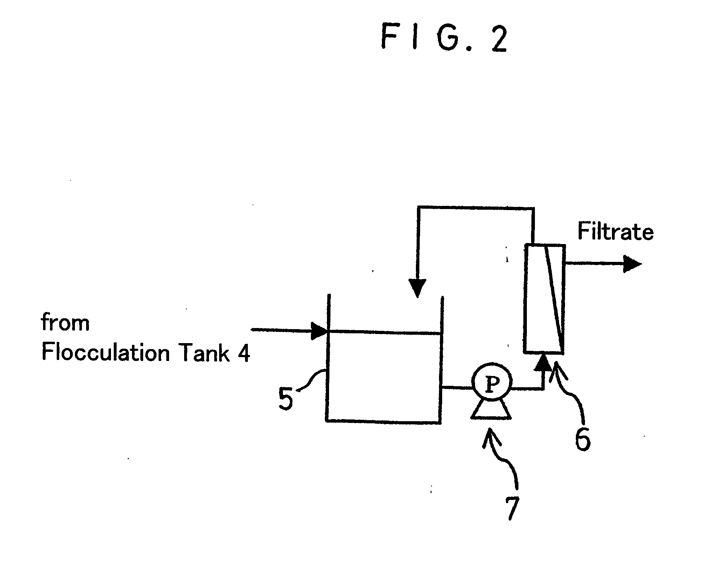

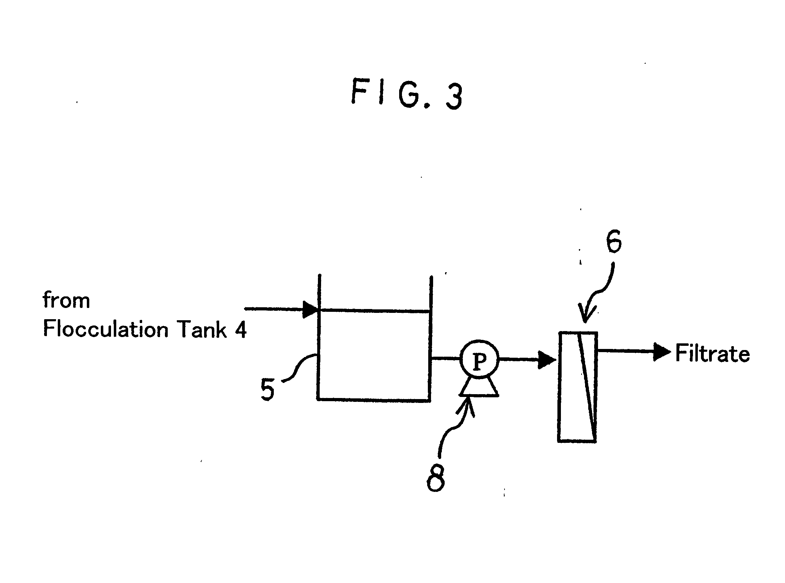

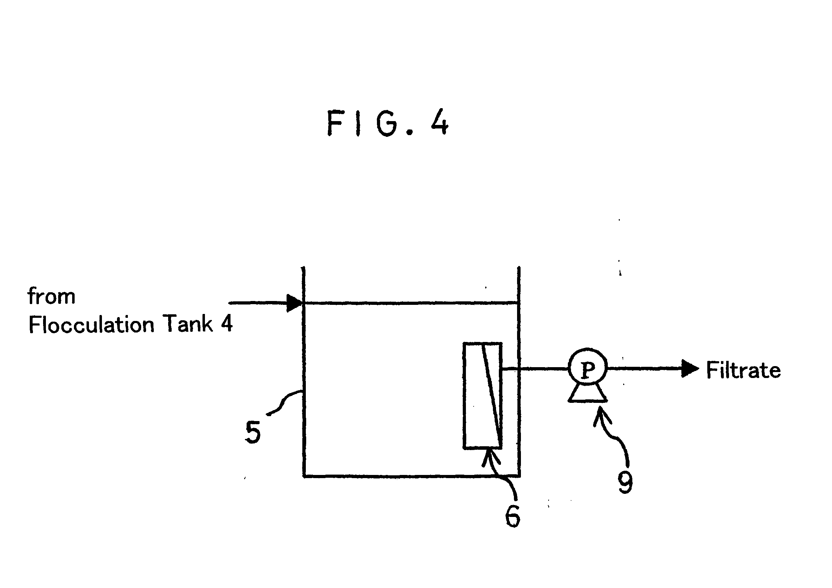

Examples of an arrangement of the separation membrane and a construction of the membrane filtering unit, which can be employed in the present invention, are shown in Figs. 2 to 4, respectively. In the practice of the present invention, any of the filtering system shown respectively in Figs. 2 to 4 can be conveniently employed. Specifically, Fig. 2 illustrates the filtering system in which the membrane module or the like including the separation membrane 6 is installed outside the complete oxidation tank 5 and the waste water containing a sludge is filtered while being circulated by means of a circulation pump 7; Fig. 3 illustrates the filtering system in which the membrane module or the like including the separation membrane 6 is installed outside the complete oxidation tank 5 and the total amount of the waste water containing a sludge is filtered while being supplied to the membrane module under pressure given by a booster pump 8; and Fig. 4 illustrates the filtering system in which the membrane module or the like including the separation membrane 6 is installed within the complete oxidation tank 5 and is filtered by the separation membrane while being sucked by a suction pump 9. Depending on the arrangement of the complete oxidation tank 5 and the membrane module, the water head may be employed in place of the use of the booster pump 8 or the suction pump 9.

It is, however, to be noted that the filtering system shown in Fig. 2 is generally advantage in that it can be operated at a high filtration flux and can have a relatively small surface area of the separation membrane 6, it has a drawback in that a relatively large energy is required because the waste water containing a sludge must be circulated. On the other hand, the filtering system shown in Fig. 3 although advantageous in that a relatively small space is sufficient for installation and a relatively small energy is required, it has a drawback in that the filtration flux is generally low and a relatively large surface area of the separation membrane 6 is therefore required. Also, where the filtering system shown in Fig. 4, in which the separation membrane 6 is immersed within the complete oxidation tank 5 and the waste water is filtered by means of suction or the water head, is employed, the membrane module containing the separation membrane 6 can be mounted atop an air diffusing apparatus and clogging of the separation membrane 6 can be suppressed by the utilization of an effect of washing of the membrane surface with diffused air. For the purpose of embodying the present invention, waste water treatment facilities may be newly set up, but alternatively the existing waste water treatment facilities may be remodeled.

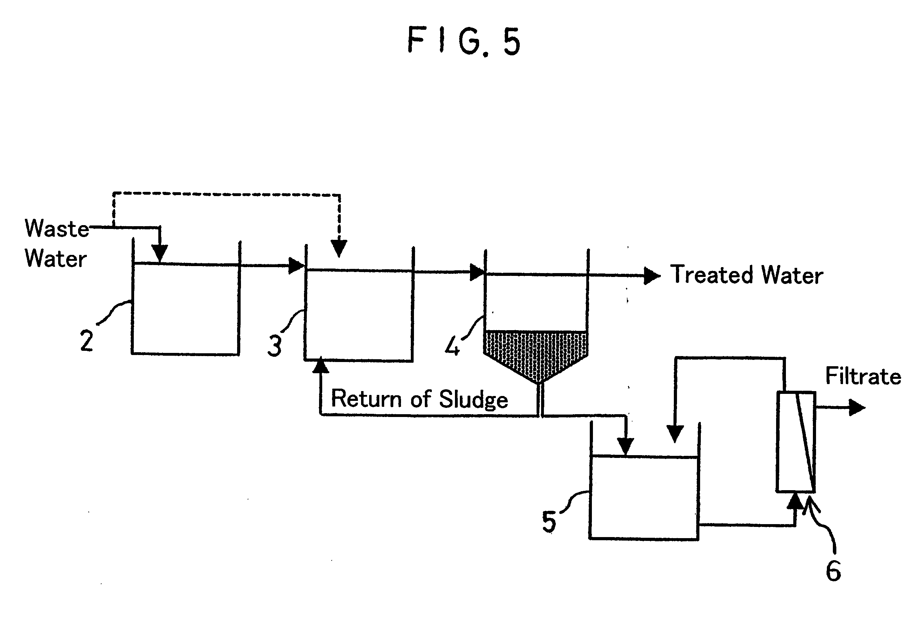

Fig. 5 illustrates, in a diagrammatic representation, the sequence of treatment of waste water according to a second preferred embodiment of the waste water treatment method of the present invention. This second embodiment differs from the previously described first embodiment as regards the details of the sludge flocculating process.

### Sludge Flocculating Process

Waste water is, after it has been subjected to a pretreatment in which an oil component and excessive matter have been removed from the waste water, then introduced into a carrier-fluidized aeration tank 2 shown in Fig. 5. This carrier-fluidized aeration tank 2 defines a first aeration tank. For the carrier-fluidized aeration tank 2, any known carrier may be employed, which may be selected from a group consisting of gel-like carriers, plastic carriers, fibrous carriers and a mixture of two or more of them. Of them, the use of acetalizing polyvinyl alcohol gel carriers is preferred because of its high processing performance and fluidity. The amount of the carrier filled in the aeration tank is preferably chosen to be within the range of 3 to 50%, and more preferably 5 to 30%, of the capacity of the aeration tank and so is chosen in view of the high processing performance and fluidity.

In this system in order to reduce the size of the carrier-fluidized aeration tank 2 as small as possible, the s-BOD volume load in the carrier-fluidized aeration tank 2 is preferably not less than 1 kg/m³·day. The s-BOD referred to above is intended to means the BOD measured after filtration through a membrane filter having a pore size of 0.45- µm and this BOD contains no microorganisms. The larger the s-BOD volume load, the more compact the carrier-fluidized aeration tank 2. By suitably selecting the type of the carrier and the amount of the carrier filled in the aeration tank 2, the system can be operated under the s-BOD volume load of not smaller than 2 kg/m3·day and even larger than 5 kg/m³. day.

The waste water treated in the carrier-fluidized aeration tank 2, where preferably not smaller than 90%, and more preferably not smaller than 95%, of the s-BOD component has been removed therefrom is subsequently introduced into an activated sludge aeration tank 3 defining a second aeration tank. Since the microorganisms contained in the sludge have been finely divided in the carrier-fluidized aeration tank 2 as a result of the aeration tank 2 having been operated under an extremely high load, the sludge cannot settle by itself within the carrier-fluidized aeration tank 2. Accordingly, the waste water treated in the carrier-fluidized aeration tank 2 need be introduced into the activated sludge aeration tank 3 so that particles of the treated waste water can be adsorbed by an activated sludge capable of being highly flocculated.

The flocculation tank 4 following the activated sludge aeration tank 3 can be operated under the previously described known manner. However, since the waste water to be introduced into the flocculation tank 4 is the waste water from which a substantial amount of the s-BOD component has been removed within the carrier-fluidized aeration tank 2, the flocculation tank 4 will often find difficulty operating regularly because of too low load. In such case, the flocculation tank 4 is preferably operated with an appropriate load imparted by introducing portion of the waste water directly into the activated sludge aeration tank 3 having been bypassed the carrier-fluidized aeration tank 2, or by supplying a source of BOD component such as, for example, methanol into the activated sludge aeration tank 3.

In the flocculation tank 4, the excessive sludge flowing from the activated sludge aeration tank 3 in any known manner is allowed to flocculate by itself, with the resultant supernatant liquid subsequently discharged out of the system. As a result thereof, the sludge generally deposits at the bottom of the flocculation tank 4 in a quantity of 10,000 mg/liter as MLSS. However, in order to keep the interface between the sludge and the supernatant liquid at a predetermined level, the sludge is quantitatively or routinely drawn out from the bottom of the flocculation tank 4; portion of the sludge is returned to the activated sludge aeration tank 3 so that it can be used for retaining the quantity of the MLSS at a predetermined value while the remaining portion thereof is introduced into the complete oxidation tank 5.

Thereafter, the process flow takes place in a manner substantially similar to that described in connection with the previously described first embodiment and, therefore, the details thereof are not reiterated for the sake brevity.

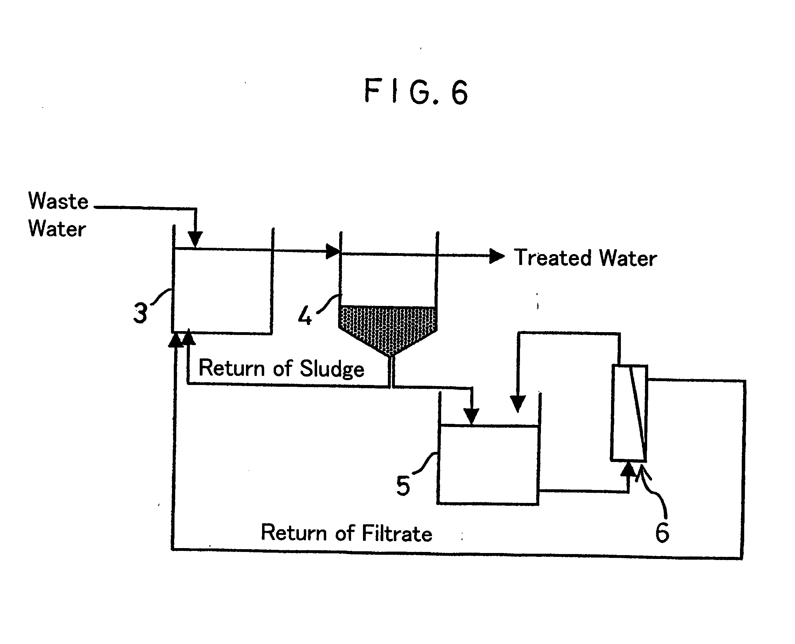

Fig. 6 illustrates, in a diagrammatic representation, the sequence of treatment of waste water according to a third preferred embodiment of the waste water treatment method of the present invention. This third embodiment is similar to the previously described first embodiment, except that in the embodiment of Fig. 6, an eutrophication preventing process is additionally employed, in which the filtrate (filtered water) discharged from the excessive sludge filtration process taking place in the separation membrane 6 described in connection with the first embodiment is totally or partly returned to the activated sludge aeration tank 3.

By allowing the filtrate to be returned to the activated sludge aeration tank 3 in the manner described above, nitrogen and phosphorus contained in the filtrate can be used as a source of nutrients for the removal of the BOD component. Accordingly, not only can nitrogen and phosphorus, which will be discharged from the system, be reduced, but the respective amounts of nitrogen and phosphorus to be added as a source of nutrients can also be reduced.

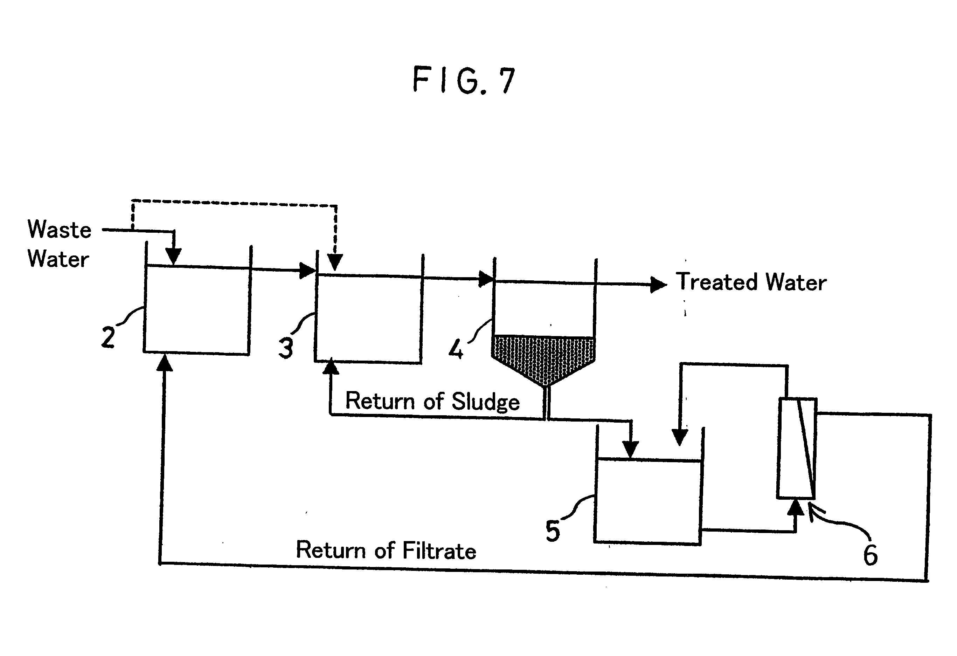

Fig. 7 illustrates, in a diagrammatic representation, the sequence of treatment of waste water according to a fourth preferred embodiment of the waste water treatment method of the present invention. This fourth embodiment is similar to the previously described second embodiment, except that in the fourth embodiment, an eutrophication preventing process is additionally employed, in which the filtrate (filtered water) discharged from the excessive sludge filtration process taking place in the separation membrane 6 described in connection with the second embodiment is totally or partly returned to the carrier-fluidized aeration tank 2 and/or the activated sludge aeration tank 3.

The use of the carrier-fluidized aeration tank 2 makes it possible for the system to be operated under a high load. In addition, the return of the filtrate back to the carrier-fluidized aeration tank 2 and/or the activated sludge aeration tank 3 allows the nitrogen and phosphorus contained in the filtrate to be similarly utilized as a source of nutrients for the removal of the BOD component and, accordingly, not only can nitrogen and phosphorus, which will be discharged from the system, be reduced, but the respective amounts of nitrogen and phosphorus to be added as a source of nutrients can also be reduced.

Hereinafter, the present invention will be demonstrated by way of the following examples that are not intended to limit the scope of the present invention, but taken only for the purpose of illustration.

### Example 1:

Waste water discharged at a rate of 400 m³ per day, the BOD of which was 1,000 mg/liter, was experimentally treated according to the process flow shown in Fig. 1 and with the use of a waste water treatment system including an activated sludge aeration tank having a capacity of 800 m³, a flocculation tank having a capacity of 120 m³, a complete oxidation tank having a capacity of 200 m³ and the membrane filtration unit. Portion of the sludge within the flocculation tank was returned to the activated sludge aeration tank so that the MLSS of the activated sludge aeration tank could attain about 3,000 mg/liter. The flocculation tank exhibited a good sludge flocculation and the BOD of the treated water was found to be not larger than 10 mg/liter and the SS amount (the amount of suspended solids) was also found to be not larger than 10 mg/liter. Also, portion of the flocculated sludge was sent to the complete oxidation tank so that the interface between the sludge and the supernatant liquid can be kept at a predetermined level. (The flow rate at that time was about 10 m³ per day.)

The membrane filtration unit mounted with a hollow fiber membrane module made of polysulfone resins and having a membrane surface area of 10 m² and a pore size of 0.1 µm was installed outside the complete oxidation tank. This membrane filtration unit was operated on an internal pressure type filtration (at a cross-flow rate of 2.5 m/sec) at a constant flow rate of about 1.1 m³/m² per day, with the filtrate totally discharged to the outside of the complete oxidation tank. During the filtration process, back washing of the separation membrane with the filtrate was carried out once every 15 minutes.

The operation of the complete oxidation tank was started initially with water filled therein and the MLSS gradually increased to and remained at about 10,000 mg/liter. The s-BOD sludge load at that time was found to be 0.05 kg-BOD/Kg-MLSS per day.The transmembrane pressure difference gradually increased and, therefore, the chemical cleaning with sodium hypochlorite was required at intervals of a period of about six months. Although the system was operated continuously for about one year, the MLSS in the complete oxidation tank was found to have been stabilized at about 10,000 mg/liter and drawing of the sludge out of the system was never carried out during this period. The BOD of the filtrate was found not larger than 2 mg/liter and the SS was found to be zero, i.e., to have been completely removed.

### Example 2:

Waste water discharged at a rate of 20 m³ per day, the BOD of which was 3,000 mg/liter, was experimentally treated according to the process flow shown in Fig. 1 and with the use of a waste water treatment system including an activated sludge aeration tank having a capacity of 120 m³, a flocculation tank having a capacity of 6 m³, a complete oxidation tank having a capacity of 30 m³ and the membrane filtration unit. Portion of the sludge within the flocculation tank was returned to the activated sludge aeration tank so that the MLSS of the activated sludge aeration tank could attain about 3,500 mg/liter. The flocculation tank exhibited a good sludge flocculation and the BOD of the treated water was found to be not larger than 10 mg/liter and the SS amount (the amount of suspended solids) was also found to be not larger than 10 mg/liter. Also, portion of the flocculated sludge was sent to the complete oxidation tank so that the interface between the sludge and the supernatant liquid can be kept at a predetermined level. (The flow rate at that time was about 3 m³ per day.)

The membrane filtration unit mounted with a single hollow fiber membrane module made of polysulfone resins and having a membrane surface area of 5 m² and a molecular weight cutoff of 13,000 was installed outside the complete oxidation tank. This membrane filtration unit was operated on an internal pressure type filtration (at a cross-flow rate of 2 m/sec) at a constant flow rate of about 0.7 m³/m² per day, with the filtrate totally discharged to the outside of the complete oxidation tank. During the filtration process, back washing of the separation membrane with the filtrate was carried out once every 20 minutes.

The operation of the complete oxidation tank was started initially with water filled therein and the MLSS gradually increased to and remained at about 9,000 mg/liter. The s-BOD sludge load at that time was found to be 0.04 kg-BOD/Kg-MLSS per day.

Although the system was operated continuously for about two years, the MLSS in the complete oxidation tank was found to have been stabilized at about 9,000 mg/liter and drawing of the sludge out of the system was never carried out during this period. The BOD of the filtrate was found not larger than 3 mg/liter and the SS was found to be zero, i.e., to have been completely removed.

### Example 3:

Waste water discharged at a rate of 400 m³ per day, the BOD of which was 1,000 mg/liter, was experimentally treated according to the process flow shown in Fig. 5 and with the use of a waste water treatment system including a carrier-fluidized aeration tank having a capacity of 160 m³, an activated sludge aeration tank having a capacity of 140 m³, a flocculation tank having a capacity of 120 m³, a complete oxidation tank having a capacity of 60 m³ and the membrane filtration unit. While a major portion of the waste water was introduced into the carrier-fluidized aeration tank, portion of the waste water was fractionally introduced into the activated sludge aeration tank so that the sludge load within the activated sludge aeration tank could be kept at 0.1 kg-BOD/Kg-MLSS per day. The carrier-fluidized aeration tank was charged with 8 m³ of a gel-like carrier of acetalizing polyvinyl alcohol (4 mm in diameter).

Portion of the sludge within the flocculation tank was returned to the activated sludge aeration tank so that the MLSS of the activated sludge aeration tank could attain about 3,000 mg/liter. The flocculation tank exhibited a good sludge flocculation and the BOD of the treated water was found to be not larger than 10 mg/liter and the SS amount-(the amount of suspended solids) was also found to be not larger than 10 mg/liter. Also, portion of the flocculated sludge was sent to the complete oxidation tank so that the interface between the sludge and the supernatant liquid can be kept at a predetermined level. (The flow rate at that time was about 6 m³ per day.)

The membrane filtration unit mounted with a single hollow fiber membrane module made of polysulfone resins and having a molecular weight cutoff of 13,000 and a membrane surface area of 10 m² was installed outside the complete oxidation tank. This membrane filtration unit was operated on an internal pressure type filtration (at a cross-flow rate of 2.5 m/sec) at a constant flow rate of 0.7 m³/m² per day, with the filtrate totally discharged to the outside of the complete oxidation tank. The operation of the complete oxidation tank was started initially with water filled therein and the MLSS gradually increased to and remained at about 10,000 mg/liter. The s-BOD sludge load at that time was found to be 0.05 kg-BOD/Kg-MLSS per day. The transmembrane pressure difference gradually increased and, therefore, the chemical cleaning with sodium hypochlorite was required at intervals of a period of about six months. Although the system was operated continuously for about one year, the MLSS in the complete oxidation tank was found to have been stabilized at about 10,000 mg/liter and drawing of the sludge out of the system was never carried out during this period. The BOD of the filtrate was found not larger than 2 mg/liter and the SS was found to be zero, i.e., to have been completely removed.

### Example 4:

Waste water discharged at a rate of 20 m³ per day, the BOD of which was 3,000 mg/liter, was experimentally treated according to the process flow shown in Fig. 5 and with the use of a waste water treatment system including a carrier-fluidized aeration tank having a capacity of 25 m³, an activated sludge aeration tank having a capacity of 20 m³, a flocculation tank having a capacity of 6 m³, a complete oxidation tank having a capacity of 10 m³ and the membrane filtration unit. While a major portion of the waste water was introduced into the carrier-fluidized aeration tank, portion of the waste water was fractionally introduced into the activated sludge aeration tank so that the sludge load within the activated sludge aeration tank could be kept at 0.1 kg-BOD/Kg-MLSS per day. The carrier-fluidized aeration tank was charged with 2 m³ of a gel-like carrier of acetalizing polyvinyl alcohol (4 mm in diameter).

Portion of the sludge within the flocculation tank was returned to the activated sludge aeration tank so that the MLSS of the activated sludge aeration tank could attain about 3,500 mg/liter. The flocculation tank exhibited a good sludge flocculation and the BOD of the treated water was found to be not larger than 10 mg/liter and the SS amount (the amount of suspended solids) was also found to be not larger than 10 mg/liter. Also, portion of the flocculated sludge was sent to the complete oxidation tank so that the interface between the sludge and the supernatant liquid can be kept at a predetermined level. (The flow rate at that time was about 0.9 m³ per day.)

The membrane filtration unit mounted with a single hollow fiber membrane module made of polysulfone resins and having a molecular weight cutoff of 13,000 and a membrane surface area of 1 m² was installed outside the complete oxidation tank. This membrane filtration unit was operated on an internal pressure type filtration (at a cross-flow rate of 2 m/sec) at a constant flow rate of 1 m³/m² per day, with the filtrate totally discharged to the outside of the complete oxidation tank. During the filtration process, the separation membrane was physically washed by means of back washing with filtrate at intervals of a filtering period of 15 minutes, with a concentrated liquid discharged having been returned totally to the complete oxidation tank.

The operation of the complete oxidation tank was started initially with water filled therein and the MLSS gradually increased to and remained at about 9,000 mg/liter. The s-BOD sludge load at that time was found to be 0.04 kg-BOD/Kg-MLSS per day. -Although the system was operated continuously for about one year, the MLSS in the complete oxidation tank was found to have been stabilized at about 9,000 mg/liter and drawing of the sludge out of the system was never carried out during this period. The BOD of the filtrate was found not larger than 2 mg/liter and the SS was found to be zero, i.e., to have been completely removed.

### Comparative Example 1:

Waste water similar to that used in Example 4 (waste water discharged at a rate of 20 m³ per day, the BOD of which was 3,000 mg/liter) was experimentally treated with the use of a waste water treatment system including a carrier-fluidized aeration tank having a capacity of 20 m³, an activated sludge aeration tank having a capacity of 20 m³ and a flocculation tank having a capacity of 6 m³. Portion of the sludge within the flocculation tank was returned to the activated sludge aeration tank so that the MLSS of the activated sludge aeration tank could attain about 3,500 mg/liter. The flocculation tank exhibited a good sludge flocculation and the BOD of the treated water was found to be not larger than 10 mg/liter and the SS amount (the amount of suspended solids) was also found to be not larger than 10 mg/liter. However, it has been found that the interface of the sludge within the flocculation tank gradually increased and a carry-over of the sludge subsequently took place from the flocculation tank into the treated water, resulting in degradation of the treated water. It has also been found that unless the sludge was drawn out of the system, the system could no longer be operated.

### Comparative Example 2:

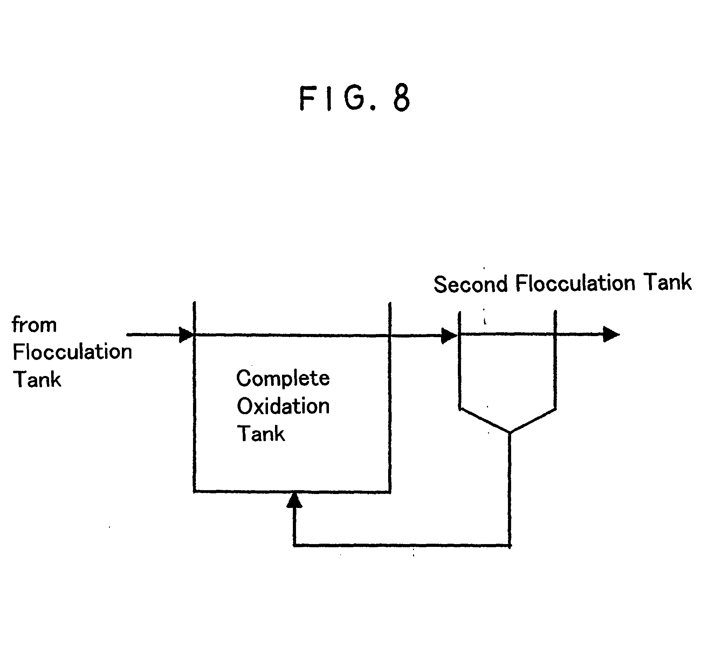

Waste water similar to that used in Example 4 (waste water discharged at a rate of 20 m³ per day, the BOD of which was 3,000 mg/liter) was experimentally treated with the use of a waste water treatment system including a carrier-fluidized aeration tank having a capacity of 20 m³, an activated sludge aeration tank having a capacity of 20 m³, a flocculation tank having a capacity of 6 m³ and a complete oxidation tank having a capacity of 35 m³. Portion of the sludge within the flocculation tank was returned to the activated sludge aeration tank so that the MLSS of the activated sludge aeration tank could attain about 3,500 mg/liter. The flocculation tank exhibited a good sludge flocculation and the BOD of the treated water was found to be not larger than 10 mg/liter and the SS amount (the amount of suspended solids) was also found to be not larger than 10 mg/liter. In addition, to keep the interface of the sludge within the flocculation tank at a predetermined level, portion of the deposit precipitated within the flocculation tank was sent to the complete oxidation tank (the flow rate at that time was about 0.5 m³ per day). However, it has been found that despite that an attempt had been made to flocculate within second flocculation tank portion of the liquid within the complete oxidation tank as shown in Fig. 8, the sludge was dispersed so finely that flocculation was impossible to perform.

### Comparative Example 3:

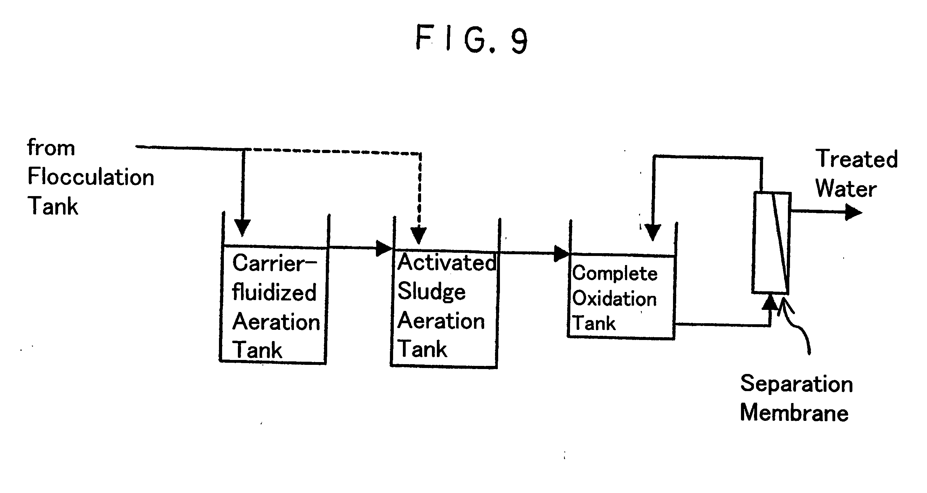

Waste water similar to that used in Example 3 (waste water discharged at a rate of 400 m³ per day, the BOD of which was 1,000 mg/liter) was experimentally treated according to the process flow shown in Fig. 9 and with the use of a waste water treatment system including a carrier-fluidized aeration tank having a capacity of 160 m³, a complete oxidation tank having a capacity of 190 m³ and a membrane filtration unit. The membrane filtration unit mounted with 14 hollow fiber membrane modules each made of polysulfone resins and having a membrane surface area of 33 m² and a molecular weight cutoff of 13,000 was installed outside the complete oxidation tank. This membrane filtration unit was operated on an internal pressure type filtration (at a cross-flow rate of 2.5 m/sec) at a constant flow rate of about 01 m³/m² per day, with the filtrate totally discharged to the outside of the complete oxidation tank.

The operation of the complete oxidation tank was started initially with water filled therein and the MLSS gradually increased to and remained at about 10,000 mg/liter. The s-BOD sludge load at that time was found to be 0.05 kg-BOD/Kg-MLSS per day. The transmembrane pressure difference gradually increased and, therefore, the chemical cleaning with sodium hypochlorite was required at intervals of a period of about six months. Although the system was operated continuously for about one year, the MLSS in the complete oxidation tank was found to have been stabilized at about 10,000 mg/liter and drawing of the sludge out of the system was never carried out during this period. The system operated satisfactorily in that the BOD of the filtrate was found not larger than 2 mg/liter and the SS was found to be zero, i.e., to have been completely removed, but it has been found involving a considerable problem that the membrane filtration unit required a high cost of installation and, also, a high running cost.

### Example 5:

Waste water discharged at a rate of 20 m³ per day, the BOD of which was 3,000 mg/liter, was experimentally treated according to the process flow shown in Fig. 6 and with the use of a waste water treatment system including an activated sludge aeration tank having a capacity of 120 m³, a flocculation tank having a capacity of 6 m³, a complete oxidation tank having a capacity of 30 m³ and the membrane filtration unit. Since the waste water contained neither nitrogen nor phosphorus, urea and phosphoric acid were added in a proportion corresponding to BOD:N:P = 100:5:1.

During the waste water treatment, portion of the sludge within the flocculation tank was returned to the activated sludge aeration tank so that the MLSS of the activated sludge aeration tank could attain about 3,500 mg/liter. The flocculation tank exhibited a good sludge flocculation and the BOD of the treated water was found to be not larger than 10 mg/liter and the SS amount (the amount of suspended solids) was also found to be not larger than 10 mg/liter. Also, portion of the flocculated sludge was sent to the complete oxidation tank (The flow rate at that time was about 6 m³ per day.) to keep the interface of the sludge within the flocculation tank at a predetermined level.

The membrane filtration unit mounted with a single hollow fiber membrane module made of polysulfone resins and having a molecular weight cutoff of 13,000 and a membrane surface area of 10 m² was installed outside the complete oxidation tank. This membrane filtration unit was operated on an internal pressure type filtration (at a cross-flow rate of 2 m/sec) at a constant flow rate of 1 m³/m² per day, with the filtrate returned to the activated sludge aeration tank.

During the filtration process, the separation membrane was physically washed by means of back washing with the filtrate at intervals of a filtering period of 15 minutes, with a concentrated liquid discharged having been returned totally to the complete oxidation tank.

The operation of the complete oxidation tank was started initially with water filled therein and the MLSS gradually increased to and remained at about 9,000 mg/liter. The s-BOD sludge load at that time was found to be 0.04 kg-BOD/Kg-MLSS per day.

Also, by monitoring the respective concentrations of nitrogen and phosphorus both contained in the filtrate being returned to the aeration tank, the respective amounts of nitrogen and phosphorus being added to the aeration tank were reduced and, however, after passage of about 3 weeks, addition of nitrogen and phosphorus came to be no longer needed. Although the system was operated continuously for about two years, the MLSS in the complete oxidation tank was found to have been stabilized at about 9,000 mg/liter and drawing of the sludge out of the system was never carried out during this period.

### Example 6:

Waste water discharged at a rate of 400 m³ per day, the BOD of which was 1,000 mg/liter, was experimentally treated according to the process flow shown in Fig. 7 and with the use of a waste water treatment system including a carrier-fluidized aeration tank having a capacity of 160 m³, an activated sludge aeration tank having a capacity of 140 m³, a flocculation tank having a capacity of 120 m³, a complete oxidation tank having a capacity of 60 m³ and the membrane filtration unit. While a major portion of the waste water was introduced into the carrier-fluidized aeration tank, portion of the waste water was fractionally introduced into the activated sludge aeration tank so that the sludge load within the activated sludge aeration tank could be kept at 0.1 kg-BOD/Kg-MLSS per day. The carrier-fluidized aeration tank was charged with 8 m³ of a gel-like carrier of acetalizing polyvinyl alcohol (4 mm in diameter). Since the waste water contained neither nitrogen nor phosphorus, urea and phosphoric acid were added in a proportion corresponding to BOD:N:P = 100:5:1.

Portion of the sludge within the flocculation tank was returned to the activated sludge aeration tank so that the MLSS of the activated sludge aeration tank could attain about 3,000 mg/liter. The flocculation tank exhibited a good sludge flocculation and the BOD of the treated water was found to be not larger than 10 mg/liter and the SS amount (the amount of suspended solids) was also found to be not larger than 10 mg/liter. Also, portion of the flocculated sludge was sent to the complete oxidation tank so that the interface between the sludge and the supernatant liquid can be kept at a predetermined level. (The flow rate at that time was about 10 m³ per day.)

The membrane filtration unit mounted with a single hollow fiber membrane module made of polysulfone resins and having a molecular cutoff of 13,000 and a membrane surface area of 10 m² was installed outside the complete oxidation tank. This membrane filtration unit was operated on an internal pressure type filtration (at a cross-flow rate of 2.5 m/sec) at a constant flow rate of 0.7 m³/m² per day, with the filtrate returned to the activated sludge aeration tank. The operation of the complete oxidation tank was started initially with water filled therein and the MLSS gradually increased to and remained at about 10,000 mg/liter. The s-BOD sludge load at that time was found to be 0.05 kg-BOD/Kg-MLSS per day.

Also, by monitoring the respective concentrations of nitrogen and phosphorus both contained in the filtrate being returned to the aeration tank, the respective amounts of nitrogen and phosphorus being added to the aeration tank were reduced and, however, after passage of about one month, addition of nitrogen and phosphorus came to be no longer needed. No problem was found in removing the BOD component. The transmembrane pressure difference gradually increased and, therefore, the chemical cleaning with sodium hypochlorite was required at intervals of a period of about six months. Although the system was operated continuously for about one year, the MLSS in the complete oxidation tank was found to have been stabilized at about 10,000 mg/liter and drawing of the sludge out of the system was never carried out during this period.

### Comparative Example 4:

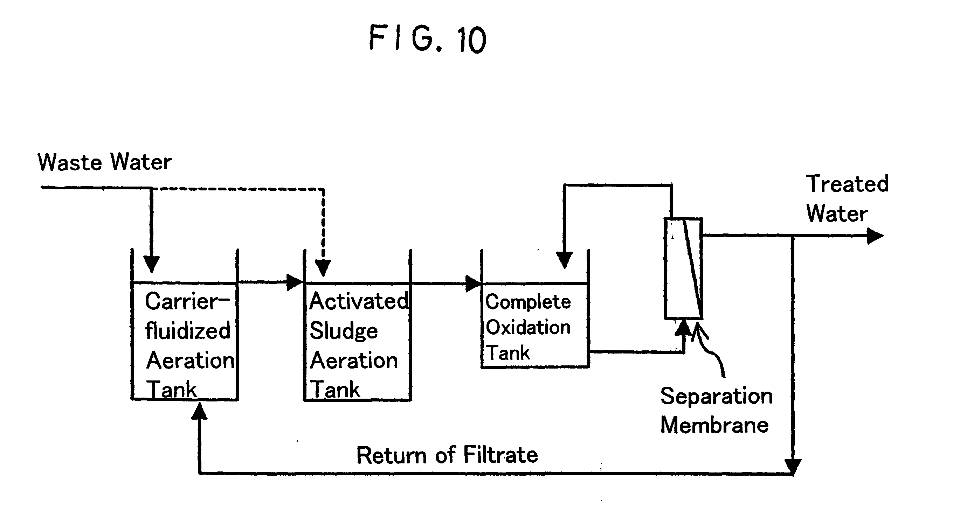

Waste water similar to that used in Example 6 (waste water discharged at a rate of 400 m³ per day, the BOD of which was 1,000 mg/liter) was experimentally treated according to the process flow shown in Fig. 10 and with the use of a waste water treatment system including a carrier-fluidized aeration tank having a capacity of 160 m³, an activated sludge aeration tank having a capacity of 190 m³, a complete oxidation tank having a capacity of 190 m³ and a membrane filtration unit. While a major portion of the waste water was introduced into the carrier-fluidized aeration tank, portion of the waste water was fractionally introduced into the activated sludge aeration tank so that the sludge load within the activated sludge aeration tank could be kept at 0.1 kg-BOD/Kg-MLSS per day. The carrier-fluidized aeration tank was charged with 16 m³ of a gel-like carrier of acetalizing polyvinyl alcohol (4 mm in diameter). Since the waste water contained neither nitrogen nor phosphorus, urea and phosphoric acid were added in a proportion corresponding to BOD:N:P =100:5:1.

The membrane filtration unit mounted with 14 hollow fiber membrane modules each made of polysulfone resins and having a molecular weight cutoff of 13,000 and also having a membrane surface area of 33 m² was installed outside the complete oxidation tank. This membrane filtration unit was operated on an internal pressure type filtration (at a cross-flow rate of 2.5 m/sec) at a constant flow rate of 1 m³/m² per day, with the filtrate discharged to the outside of the complete oxidation tank. The operation of the complete oxidation tank was started initially with water filled therein and the MLSS gradually increased to and remained at about 10,000 mg/liter. The s-BOD sludge load at that time was found to be 0.05 kg-BOD/Kg-MLSS per day.

During this time, the transmembrane pressure difference gradually increased and, therefore, the chemical cleaning with sodium hypochlorite was required at intervals of a period of about six months. Although the system was operated continuously for about one year, the MLSS in the complete oxidation tank was found to have been stabilized at about 10,000 mg/liter and drawing of the sludge out of the system was never carried out during this period.

However, a problem has been found in that since the separation membrane was required to filtrate in a quantity corresponding to 60 times the amount dealt with in Example 1, involving a considerably high cost of installation of the filtering unit and a considerably high running cost (particularly power cost).

Also, although the BOD of the filtrate was found not larger than 2 mg/liter and the SS was found to be zero, the respective total amounts of nitrogen and phosphorus were found to be so high as 50 mg/liter and 10 mg/liter, respectively. Although an attempt was made to return portion of the filtered water to the carrier-fluidized aeration tank, the operation would have continued and the attempt was therefore given up because for substitutes of the nitrogen and phosphorus being added, a substantially total amount of the filtered water had to be returned to the carrier-fluidized aeration tank. However, when 20% of the flow of the filtered water was returned to the carrier-fluidized aeration tank, the amount of the waste water being filtered could not be dealt with and one more hollow fiber membrane module had to be added. At this time, the respective amounts of the added nitrogen and phosphorus could barely be reduced each in a quantity corresponding to 10% and, therefore, the return of the filtered water to the carrier-fluidized aeration tank could bring about no merit.

The present invention having been fully described, it is clear that the waste water can be treated at a reduced cost with minimization of the amount of the sludge being drawn.

Although the present invention has been fully described in connection with the preferred embodiments thereof with reference to the accompanying drawings which are used only for the purpose of illustration, those skilled in the art will readily conceive of numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A method of treatment of waste water, which comprises:
a sludge flocculating step of obtaining a supernatant liquid by flocculating within a flocculation tank the sludge having been treated within an activated sludge aeration tank where the waste water and an activated sludge are brought into contact with each other in an aerobic condition;
a sludge concentration retaining step of retaining a concentration of a sludge within-the activated sludge aeration tank at a predetermined value by returning portion of a sludge within the flocculation tank to the activated sludge aeration tank;
an excessive sludge complete oxidation step of maintaining an excessive sludge, which is the sludge supplied from the flocculation tank, but exclusive of that portion of the sludge returned from the flocculation tank, in a complete oxidation state in which a speed of propagation of the sludge and a speed of self-oxidation of the sludge within the complete oxidation tank are held in equilibrium with each other; and
an excessive sludge filtration step of filtering the waste water containing the sludge within the complete oxidation tank, through a separation membrane having a pore size not larger than 5 µm to thereby discharge a resultant filtrate in a quantity corresponding to an amount of a water component in the complete oxidation tank increased.

2. The waste water treatment method as claimed in Claim 1, wherein the sludge flocculating step includes a substep of, after the waste water and a carrier have been brought into contact with each other in an aerobic condition within the carrier-fluidized aeration tank, bringing the waste water and the activated sludge into contact with each other in the activated sludge aeration tank and, thereafter, obtaining a supernatant liquid by flocculating the sludge within the flocculation tank.

3. The method as claimed in Claim 1 or 2, further comprising an eutrophication preventing step of returning a total amount of or portion of the filtrate discharged during the excessive sludge filtering step to the activated sludge aeration tank.

4. The method as claimed in Claim 1 or 2, further comprising an eutrophication preventing step of returning a total amount of or portion of the filtrate discharged during the excessive sludge filtering step to the carrier-fluidized aeration tank and/or the activated sludge aeration tank.

5. The method as claimed in Claim 2, 3 or 4,
wherein the carrier-fluidized aeration tank contains a carrier that is selected from a group consisting of gel-like carriers, plastic carriers and fibrous carriers.

6. The waste water treatment method as claimed in Claim 5, wherein the carrier contained within the carrier-fluidized aeration tank is an acetalizing polyvinyl alcohol gel-like carrier.

7. The method as claimed in any one of Claims 1 to 6,
wherein the separation membrane used during the excessive sludge filtering step is a follow fiber membrane.

8. The method as claimed in any one of Claims 1 to 7,
wherein the complete oxidation tank is operated under the soluble-BOD sludge load of not larger than 0.08 kg-BOD/Kg-MLSS· day.
